# EUROPEAN PATENT SPECIFICATION

(11) **EP 0 503 034 B1**
(45) Date of publication and mention of the grant of the patent: **19.04.1995**
(21) Application number: 91917258.5
(22) Date of filing: 25.09.1991
(51) Int. Cl.: B60T 8/50, B60T 8/48

(54) **IMPROVEMENTS IN HYDRAULIC ANTI-LOCK BRAKING SYSTEMS FOR VEHICLES**
HYDRAULISCHE ANTIBLOCKIERBREMSSYSTEME FÜR FAHRZEUGE
AMELIORATIONS CONCERNANT LES SYTEMES DE FREINAGE HYDRAULIQUE ANTIBLOQUANT DE VEHICULES

(30) Priority: 28.09.1990 GB 9021232; 25.10.1990 GB 9023259
(43) Date of publication of application: 16.09.1992
(73) Proprietor: LUCAS INDUSTRIES PUBLIC LIMITED COMPANY, Solihull, West Midlands B91 3TX (GB)
(72) Inventor: FARR, Glyn, Phillip, Reginald 21 The Hamlet, Warwickshire CV35 7QW (GB)
(74) Representative: Spall, Christopher John
(86) International application number: GB9101656
(87) International publication number: WO9205991

(56) References cited:
- EP-A- 0 202 845
- EP-A- 0 332 398
- EP-A- 0 344 544
- GB-A- 2 119 881
- GB-A- 2 183 763
- US-A- 4 957 330

## Description

This invention relates to hydraulic anti-lock braking systems for vehicles of the kind in which the pressure applied to a braked wheel is controlled in response to signals from an electronic control unit, in turn responsive to signals from a speed sensor associated with the wheel.

A system of the kind set forth is known from EP-A-0 332 398. In this system a flow control valve operates with a first normally closed solenoid-operated valve to provide effective control of the pressure in the braked wheel in response to signals from the electronic control unit, and the rate of brake re-application following the recovery of a braked wheel is determined by the operation of the flow valve which meters fluid from an inlet to an outlet at a rate determined by a pressure drop across an orifice in a spool, which pressure drop is dependent upon a second solenoid-operated valve that controls the communication between the brake and an expander chamber which causes the pressure drop that causes displacement of a spool member within the flow valve. This second solenoid-operated valve controls the re-application of the brake by metering the fluid from the master cylinder into the brake whilst the brake pressure is lower than that of the master cylinder. The second solenoid-operated valve does not cause a pressure differential to be established across the spool member.

Two further systems of the kind set forth are known from EP-A-0 202 845 and EP-A-0 344 544. In these systems a flow control valve operates with a single acting normally closed solenoid-operated valve to provide effective control of the pressure in the braked wheel in response to signals from the electronic control unit, and the rate of brake re-application following the recovery of a brake wheel is determined by the operation of the flow valve which meters fluid from an inlet to an outlet at a rate determined by a pressure drop across an orifice in a spool, which pressure drop is dependent upon the force of a control spring and the area of the spool, and the flow through a variable orifice defined between a port in a housing in which the spool is movable, and an annular groove in the spool.

If the flow rate can be interrupted, the effective re-application rate can be varied from zero to a predetermined maximum. This additional feature will permit an ideal application rate dependent upon road surface conditions and provide a hold feature, that is, the pressure is held steady in order to facilitate brake intervention for traction control and will provide a larger interval to enhance the ability of the wheel to recover its true speed on a slippery road surface.

According to our invention, in an hydraulic anti-lock system for vehicles of the kind in which the pressure applied to a braked wheel is controlled in response to signals from an electronic control unit, in turn responsive to signals from a wheel speed sensor associated with the wheel, a flow control valve operating in conjunction with a first normally closed solenoid-operated valve, and the rate of brake re-application by a pump following recovery of a braked wheel being determined by a second solenoid-operated valve which acts to establish a pressure differential across a valve spool working in a bore, the second solenoid operated valve being located in a passage extending between first and second ends of the bore, in turn to meter the supply of brake-applying fluid to the brake characterised in that the passage is not connected to any other part of the hydraulic anti-lock system.

The second solenoid-operated valve therefore replaces a fixed orifice normally associated with known flow control valves and incorporated in the spools of such valves.

Conveniently the pressure drop across the second solenoid-operated valve is determined by the area of the spool and the force in a spring acting on the spool.

The area of the valve seat is chosen to be substantially equal to the area of a normal fixed orifice. Thus when the second solenoid-operated valve is open the flow control valve operates in a similar manner to known flow control valves, except that the valve seat which constitutes the fixed orifice is disposed in the housing or body of the valve as opposed to the spool.

The second solenoid-operated valve is controlled by signals from the electronic control unit and can be either open or shut, or it can be pulsed to achieve a restricted flow.

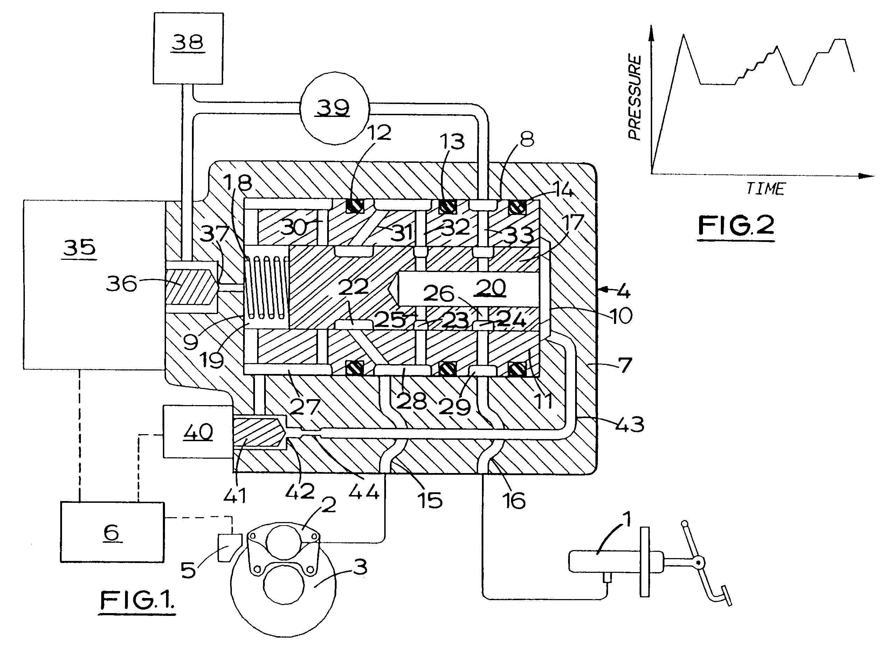

Some embodiments of our invention are illustrated in the accompanying drawings in which:-
Figure 1 is a layout of an hydraulic anti-lock braking system for a vehicle;
Figure 2 is a graph of brake pressure plotted against time;
Figure 3 is a layout of another anti-lock braking system;
Figure 4 is a layout of another braking system;
The braking system illustrated in Figure 1 of the accompanying drawings comprises a pedal-operated hydraulic master cylinder 1 for applying a brake 2 on a wheel 3 of a vehicle through a modulator assembly 4. The behaviour of the wheel is sensed by a wheel speed sensor 5 which sends signals to an electronic control unit 6, and the signals are differentiated by the unit which, in turn, emits an energising current to control operation of the modulator assembly 4.

The modulator assembly 4 comprises a housing 7 having a longitudinal bore 8 extending between axially spaced faces 9, 10 at opposite ends of the housing 7. A sleeve 11 received in the bore 8 is provided with three annular seals 12, 13, 14 of which the seals 12 and 13 are disposed on opposite sides of an outlet passage 15 leading to the brake 2, and the seals 13 and 14 are disposed on opposite sides of an inlet passage 16 from the master cylinder 1.

A spool 17 works in the bore of the sleeve 11 and is biased against the face 10 by a spring 18 housed in a chamber 19 between the opposite end of the spool 17 and the face 9. The spool 17 has a central passage in the form of a blind drilling 20 leading from the face 10. The spool 17 is also provided with three, external, annular grooves 22, 23, 24 of which the two grooves 23, 24 furthest from the spring chamber 19 have radial passages 25, 26 communicating with the drilling 20.

The sleeve 11 has three grooves 27, 28, 29 and four cross passages 30, 31, 32, 33 adapted to connect with the grooves 22, 23, 24 in either a quiescent or transient state.

A single acting solenoid operated dump valve 35 has a valve member 36 which normally engages with a seating 37 in the housing 7 to isolate the spring chamber 19 from an expander chamber 38, and a pump 39 is adapted to withdraw fluid from the expander chamber 38 and return it to the cross passage 33.

A second solenoid-operated valve 40 acting as a re-apply and hold solenoid valve comprises a valve member 41 for engagement with a seating 42 at the end of a passage 43 which leads to the rear of the spool 17 and the central drilling 20.

The passage 43 has a predetermined restriction either formed separately or established by the interaction of the secondary valve 40 and its seat 42. In the illustrated embodiment the passage 43 is provided both with a separately formed restriction 44 and with a restriction established by the interaction of the secondary valve 40 and its seat 42.

When the second valve 40 is closed it isolates the passage 43 from the spring chamber 19, and when it is open the chamber 19 and the passage 43 are in free communication.

The valve seating 42 has an area substantially the same as the area of a fixed restrictor normally provided in the end of the spool 17 which is adjacent to the chamber 19.

The spring 18 housed between the spool 17 and end face 9 may alternatively be housed between the spool 17 and end face 10 provided that it acts in a direction to expand the volume of the spool chamber between the main solenoid valve 35 and the predetermined restriction.

In a normal inoperative position for normal brake operation the solenoid valve 35 is closed and the solenoid valve 40 is open. Fluid from the master cylinder 1 passes freely through the cross passages 33, the radial passages 26, the central drilling 20, the radial passages 31 and the outlet passage 15 to the brake 2.

Upon receipt of a skid signal from the electronic control unit 6, the secondary valve 40 closes and the solenoid-operated valve 35 opens to connect the spring chamber 19 to the expander chamber 38.

When the pressure differential across the area of the spool 17 subjects the spool 17 to a force sufficient to overcome the force of the spring 18, the spool 17 moves to:-
a) Isolate the inlet 16 from the outlet 15;
b) Connect the outlet 15 to the expander chamber 38; and
c) Attain its metering position defined by a variable orifice constituted by the co-operation of the groove 24 with the passages 33 with the edge on the input side.

The reduction in pressure permits a recovery of the wheel 3, the skid signal is cancelled, and the solenoid-operated valve 35 is closed. The spool 17, however, remains in its metering position with the outlet 15 and the spring chamber 19 interconnected whilst the output pressure is less than the input pressure.

Upon brake re-application the metering edge of the spool 17 comprising the leading edge of the groove 24 acts as a valve element, the dump valve 35 closes and the assembly goes into the brake re-apply phase. Specifically the pump 39 withdraws fluid from the expander chamber 38 and pumps it into the central drilling 20 and through the external passage 43 to the valve seating 42 which defines a fixed restrictor or external orifice.

If the wheel recovery is rapid, the secondary valve 40 is fully opened so that fluid passes through the open orifice 42 into the spring chamber 19 to balance the forces which determine the extent of the metering, and fluid further passes through the spool 17 and the sleeve 11 to the brake. As the flow passes through the spring chamber 19 it purges away any trapped air. Under these conditions the modulator assembly 4 re-applies the brake at a maximum rate determined by the characteristics of the flow valve.

Should the wheel acceleration be slow the second solenoid valve 40 is closed and the brake pressure held constant, and in accordance with signals from the electronic control unit 6, subsequent pulsing of the valve 40 prevents pressure build up in the chamber 19 and increases brake pressure in steps to simulate a reduced rise rate. The spool 17 is held in a closed position with the metering edge acting as a control valve. This is achieved without encountering any of the problems of using highly loaded valves.

The solenoid of the second valve 40 can be relatively small since it has to close only against a relatively small differential, say 2-3 bar, which is calculated by the load in the spring 18 acting on the spool 17. This small differential permits accurate control of the effective brake pressure rise rate by the solenoid valve 40. The output to the valve 40 from the electronic control unit 6 takes little power and the small force to close the secondary valve 40 against the differential produces a fast acting response and in consequence the solenoid valve 40 can cycle very fast to determine flow rate. The secondary solenoid valve 40 acts, therefore, as a pilot control to the flow control valve.

If the brake 2 is to be isolated in a traction mode, both solenoid valves are energized. When an input pressure is applied, the spool 17 moves across to isolate the input 16 and connect the brake to the expander 38. Fluid in the expander is returned to the input when the motor driven pump 39 is energised.

If the brake 2 is to be connected for a traction mode, fluid pressure passes from the input 16 to the brakes. When the wheel spin starts to recover, the secondary valve is closed to maintain the pressure at that level. On control of the wheel 3, the main solenoid 35 is pulsed to relieve brake pressure and the motor driven pump 39 is energised to return fluid back to the inlet.

The characteristics achieved by the modulator assembly 4 utilised in the braking system of Figure 1 are illustrated in the graph of Figure 2 in which brake pressure (P) is plotted against time (t).

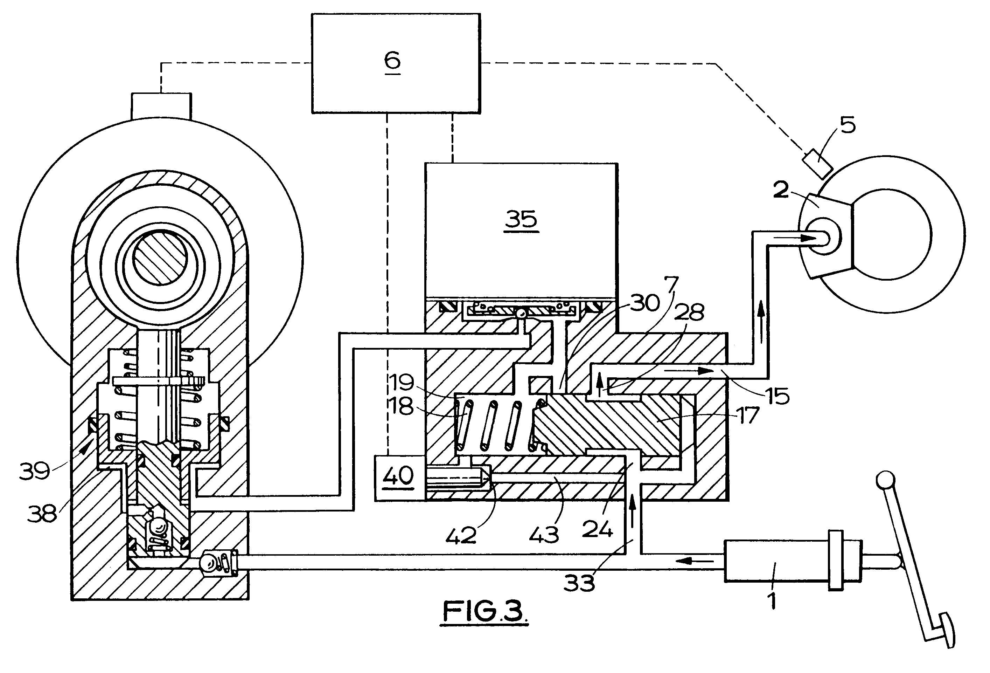

The braking system illustrated in the layout of Figure 3 is similar to that of Figure 1 and corresponding reference numerals have been applied to corresponding parts. In this construction the spool 17 is solid with a central annular groove 28 normally to transmit fluid from the input 16 to the output 15. No fixed orifice is provided in the spool 17. Instead the seating 42 of the second valve 40 defines a fixed restrictor or external orifice. In ABS mode, the spool 17 moves to isolate the input from the output and the groove 28 now connects the output with the chamber leading to the main solenoid valve 35.

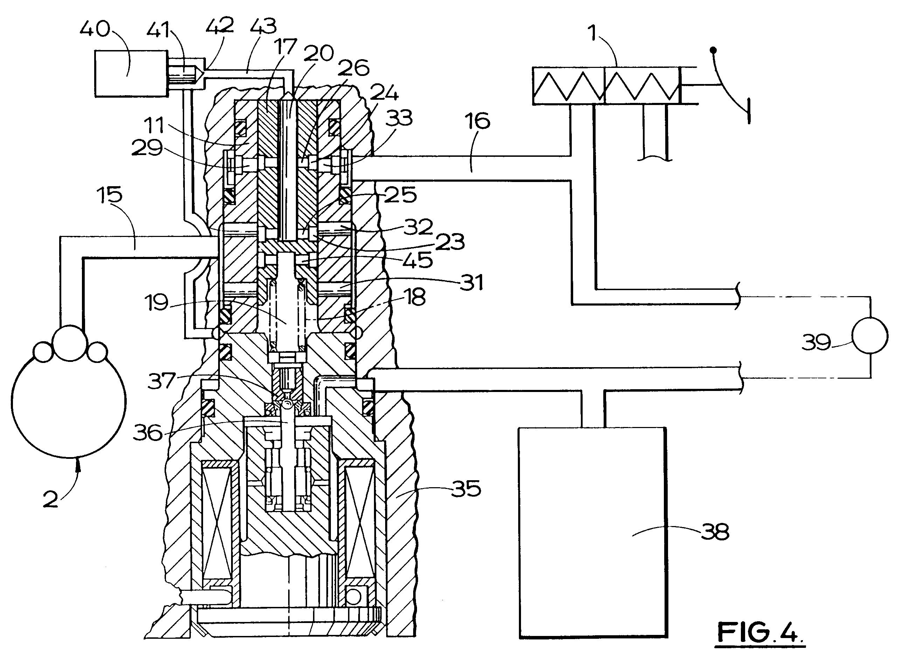

The braking system illustrated in Figure 4 of the accompanying drawings is also similar to the layout of Figures 1 and 3 and corresponding reference numerals have been applied to corresponding parts. Again no fixed orifice is provided in the spool 17 and the seating 42 of the second valve 40 defines a fixed restrictor or external orifice.

In this construction the spool 17 is centre drilled at both ends to connect with three radial passages, two on the input side 25, 26 and one 45 on the side adjacent to the chamber leading to the main solenoid valve 35. In normal operation the two cross passages 32, 33 in combination with the first radial passage 26 communicate the input 16 with the output 15.

In ABS mode, the spool 17 moves to isolate the input from the output and connects the output, via the third cross passage 31 and the third radial passage 45 to the chamber leading to the main solenoid valve.

The operation of the two systems of Figures 3 and 4 are similar to that of Figure 1 and need not be further described herein.

## Claims

1. An hydraulic anti-lock system for vehicles of the kind in which the pressure applied to a braked wheel (3) is controlled in response to signals from an electronic control unit (6), in turn responsive to signals from a wheel speed sensor (5) associated with the wheel (3), a flow control valve operating in conjunction with a first normally closed solenoid-operated valve (35), and the rate of brake re-application by a pump (39) following recovery of a braked wheel being determined by a second solenoid-operated valve (40) which acts to establish a pressure differential across a valve spool (17) working in a bore (8), the second solenoid operated valve being located in a passage extending between first and second ends of the bore (8), in turn to meter the supply of brake-applying fluid to the brake (2) characterised in that the passage is not connected to any other part of the hydraulic anti-lock system.

2. An anti-lock system according to Claim 1, characterised in that the pressure drop across the second solenoid-operated valve (40) is determined by the area of the spool (17) and the force in a spring (18) acting on the spool.

3. An anti-lock system according to Claim 1 or Claim 2, characterised in that the second solenoid-operated valve (40) comprises a valve member (41) for engagement with a seating (42).

4. An anti-lock system according to Claims 1 to 3, characterised in that the second solenoid-operated valve (40) is controlled by signals from the electronic control unit (6).

5. An anti-lock system according to Claim 3, characterised in that the valve spool (17) is provided with a spring chamber (19) at the first end.

6. An anti-lock system according to Claim 3, characterised in that the valve spool (17) is provided with a spring chamber (19) at the first end and in that the passage between the first and second ends of the bore includes a passage (43) leading from the seating (42) to the second end of the valve spool (17).

7. An anti-lock system according to Claim 5 or Claim 6, characterised in that the first solenoid-operated valve (35) isolates the spring chamber (19) from an expander chamber (38).

8. An anti-lock system according to any previous claim, characterised in that the valve spool (17) has a central passage (20).

9. An anti-lock system according to Claim 8, characterised in that the valve spool (17) is provided with three external annular grooves (22,23,24) of which the two grooves (23,24) furthest from the spring chamber (19) have radial passages (25,26) communicating with the central passage (20).

10. An anti-lock system according to Claim 9, characterised in that the valve spool (17) works in a sleeve (11), the sleeve (11) having three grooves (27,28,29) and four cross-passages (30,31,32,33) adapted to connect with the annular grooves (22,23,24) of the valve spool (17).

11. An anti-lock system according to Claim 10, characterised in that a pump (39) is adapted to withdraw fluid from the expander chamber (38) and return it to the cross-passage (33) furthest from the spring chamber (19).

12. An anti-lock system according to Claim 10 or 11, characterised in that the metering of the brake-applying fluid to the brake is attained by the co-operation of the valve spool groove (24) furthest from the spring chamber (19) with the cross passage (33) furthest from the spring chamber (19) with the edge on the input side.

13. An anti-lock system according to any of Claims 1 to 7, characterised in that the valve spool (17) has a central annular groove (28) to normally transmit fluid from an input (16) from a master cylinder (1) to an output (15) to the brake (2).

14. An anti-lock system according to Claim 13, characterised in that the metering of the brake-applying fluid to the brake (2) is attained by the groove (28) connecting the output (15) to a chamber leading to the first solenoid-operated valve (35).

15. An anti-lock system according to any of Claims 1 to 7, characterised in that the valve spool (17) is centre drilled at both ends to connect with three radial passages, the first centre drilling (20) connecting with the first and second radial passages (25,26) on the side of an input (16) from a master cylinder (1), the second centre drilling (19) connecting with the third radial passage (45) on the side of the valve spool (17) adjacent to a chamber leading to the first solenoid-operated valve (35).

16. An anti-lock system according to Claim 15, characterised in that the valve spool (17) works in a sleeve (11), the sleeve (11) having grooves and cross-passages (31,32,33) adapted to connect with the first and second radial passages (25,26) on the input side of the valve spool (17).

17. An anti-lock system according to claim 15 or claim 16, characterised in that a pump (39) is adapted to withdraw fluid from the expander chamber (38) and return it to the cross passage (33) furthest from the spring chamber (19)

18. An anti-lock system according to any of claims 15 to 17, characterised in that the metering of the brake-applying fluid to the brake is attained via the cross-passage (31) nearest the spring chamber (19) and the third radial passage (45) to the chamber leading to the first solenoid-operated valve (35).

## Patentansprüche

1. Hydraulisches Antiblockiersystem für Fahrzeuge, von der Art, bei der der an ein gebremstes Rad (3) angelegte Druck ansprechend auf Signale von einer elektronischen Steuereinheit (6) gesteuert ist, die ihrerseits auf Signale von einem dem Rad (3) zugeordneten Radgeschwindigkeitssensor (5) anspricht, wobei ein Stromventil in Verbindung mit einem ersten normalerweise geschlossenen Magnetventil (35) arbeitet und das Maß des auf eine Erholung eines gebremsten Rades folgenden von einer Pumpe (39) bewirkten Wiederanlegens einer Bremse von einem zweiten Magnetventil (40) bestimmt ist, das dazu dient, ein Druckgefälle über einen in einer Bohrung (8) laufenden Ventilkolben (17) entstehen zu lassen, wobei das zweite Magnetventil in einem Durchlaß angeordnet ist, der sich zwischen einem ersten und einem zweiten Ende der Bohrung (8) erstreckt, um seinerseits die Zufuhr bremsanlegenden Fluids zur Bremse (2) zuzumessen, dadurch gekennzeichnet, daß der Durchlaß mit keinem anderen Teil des hydraulischen Antiblockiersystems verbunden ist.

2. Antiblockiersystem nach Anspruch 1,
dadurch gekennzeichnet, daß der Druckabfall über das zweite Magnetventil (40) von der Fläche des Kolbens (17) und der Kraft einer auf ihn wirkenden Feder (18) bestimmt ist.

3. Antiblockiersystem nach Anspruch 1 oder 2,
dadurch gekennzeichnet, daß das zweite Magnetventil (40) einen Ventilkörper (41) zum Eingriff mit einem Sitz (42) aufweist.

4. Antiblockiersystem nach Ansprüchen 1 bis 3,
dadurch gekennzeichnet, daß das zweite Magnetventil (40) durch Signale von der elektronischen Steuereinheit (6) gesteuert ist.

5. Antiblockiersystem nach Anspruch 3,
dadurch gekennzeichnet, daß der Ventilkolben (17) am ersten Ende eine Federkammer (19) aufweist.

6. Antiblockiersystem nach Anspruch 3,
dadurch gekennzeichnet, daß der Ventilkolben (17) am ersten Ende eine Federkammer (19) aufweist und dadurch, daß der Durchlaß zwischen dem ersten und dem zweiten Ende der Bohrung einen Durchlaß (43) aufweist, der vom Sitz (42) zum zweiten Ende des Ventilkolbens (17) führt.

7. Antiblockiersystem nach Anspruch 5 oder 6,
dadurch gekennzeichnet, daß das erste Magnetventil (35) die Federkammer (19) von einer Ausdehnungskammer (38) trennt.

8. Antiblockiersystem nach einem vorhergehenden Anspruch,
dadurch gekennzeichnet, daß der Ventilkolben (17) einen mittigen Durchlaß (20) aufweist.

9. Antiblockiersystem nach Anspruch 8,
dadurch gekennzeichnet, daß der Ventilkolben (17) drei äußere Ringnuten (22, 23, 24) aufweist, von denen die beiden von der Federkammer (19) am weitesten entfernten Nuten (23, 24) radiale Durchlässe (25, 26) aufweisen, die mit dem mittigen Durchlaß (20) kommunizieren.

10. Antiblockiersystem nach Anspruch 9,
dadurch gekennzeichnet, daß der Ventilkolben (17) in einer Hülse (11) läuft, die drei Nuten (27, 28, 29) und vier Querdurchlässe (30, 31, 32, 33) aufweist, die dazu eingerichtet sind, mit den Ringnuten (22, 23, 24) des Ventilkolbens (17) eine Verbindung herzustellen.

11. Antiblockiersystem nach Anspruch 10,
dadurch gekennzeichnet, daß eine Pumpe (39) dazu eingerichtet ist, Fluid aus der Ausdehnungskammer (38) zu entnehmen und es an den am weitesten von der Federkammer (19) entfernten Querdurchlaß (33) zurückzuführen.

12. Antiblockiersystem nach Anspruch 10 oder 11,
dadurch gekennzeichnet, daß das Zumessen des bremsanlegenden Fluids zur Bremse (2) vom Zusammenwirken der am weitesten von der Federkammer (19) entfernten Ventilkolbennut (24) mit dem am weitesten von der Federkammer (19) entfernten Querdurchlaß (33) mit dem Rand auf der Einlaßseite bewerkstelligt wird.

13. Antiblockiersystem nach einem der Ansprüche 1 bis 7,
dadurch gekennzeichnet, daß der Ventilkolben (17) eine mittige Ringnut (28) aufweist, um normalerweise Fluid von einem Einlaß (16) von einem Hauptzylinder (1) an einen Auslaß (15) zur Bremse (2) zu übertragen.

14. Antiblockiersystem nach Anspruch 13,
dadurch gekennzeichnet, daß das Zumessen des bremsanlegenden Fluids zur Bremse (2) von der Nut (28) bewerkstelligt wird, die den Auslaß (15) mit einer zum ersten Magnetventil (35) führenden Kammer verbindet.

15. Antiblockiersystem nach einem der Ansprüche 1 bis 7,
dadurch gekennzeichnet, daß der Ventilkolben (17) an beiden Enden mittig gebohrt ist, um eine Verbindung mit drei radialen Durchlässen herzustellen, wobei die erste mittige Bohrung (20) eine Verbindung mit dem ersten und dem zweiten radialen Durchlaß (25, 26) auf der Seite eines Einlasses (16) von einem Hauptzylinder (1) herstellt, und die zweite mittige Bohrung (19) eine Verbindung mit dem dritten radialen Durchlaß (45) auf der einer Kammer, die zu dem ersten Magnetventil (35) führt, benachbarten Seite des Ventilkolbens (17) herstellt.

16. Antiblockiersystem nach Anspruch 15,
dadurch gekennzeichnet, daß der Ventilkolben (17) in einer Hülse (11) läuft, die Nuten und Querdurchlässe (31, 32, 33) aufweist, die dazu eingerichtet sind, eine Verbindung mit dem ersten und dem zweiten radialen Durchlaß (25, 26) auf der Einlaßseite des Ventilkolbens (17) herzustellen.

17. Antiblockiersystem nach Anspruch 15 oder 16,
dadurch gekennzeichnet, daß eine Pumpe (39) dazu eingerichtet ist, Fluid von der Ausdehnungskammer (38) zu entnehmen und es an den am weitesten von der Federkammer (19) entfernten Querdurchlaß (33) zurückzuführen.

18. Antiblockiersystem nach einem der Ansprüche 15 bis 17,
dadurch gekennzeichnet, daß das Zumessen des bremsanlegenden Fluids zur Bremse bewerkstelligt wird über den der Federkammer (19) am nächsten gelegenen Querdurchlaß (31) und den dritten radialen Durchlaß (45) zu der Kammer, die zu dem ersten Magnetventil (35) führt.

## Revendications

1. Système hydraulique anti-patinage pour véhicules, du type dans lequel la pression exercée sur une roue freinée (3) est commandée en réponse à des signaux provenant d'un circuit électronique de commande (6) qui, de son côté, est sensible à des signaux provenant d'un détecteur (5) de vitesse de roue qui est associé à la roue (3), un distributeur de commande de la circulation travaillant conjointement avec une première électro-vanne (35) normalement fermée et le taux de réapplication de freinage par une pompe (39) à la suite du rétablissement d'une roue freinée étant déterminé par une seconde électrovanne (40) qui agit pour établir un différentiel de pression de part et d'autre d'un tiroir (17) de distributeur qui travaille dans un alésage (8), la seconde électro-vanne étant placée dans un passage situé entre les première et seconde extrémités de l'alésage (8) de manière que de son côté il dose l'alimentation du frein (2) en fluide d'exercice du freinage, caractérisé en ce que le passage n'est raccordé à aucune autre partie du système hydraulique anti-patinage.

2. Système anti-patinage selon la revendication 1, caractérisé en ce que la chute de pression de part et d'autre de la seconde électro-vanne (40) est déterminée par la superficie du tiroir (17) et par la force d'un ressort (18) agissant sur le tiroir.

3. Système anti-patinage selon la revendication 1 ou la revendication 2, caractérisé en ce que la seconde électro-vanne (40) comprend un élément de vanne (41) pouvant se placer contre un siège (42).

4. Système anti-patinage selon les revendications 1 à 3, caractérisé en ce que la seconde électro-vanne (40) est commandée par des signaux provenant du circuit électronique de commande (6).

5. Système anti-patinage selon la revendication 3, caractérisé en ce que le tiroir (17) du distributeur comporte à la première extrémité une chambre (19) pour le ressort.

6. Système anti-patinage selon la revendication 3, caractérisé en ce que le tiroir (17) du distributeur comporte à la première extrémité une chambre (19) pour le ressort et en ce que le passage situé entre les première et seconde extrémités de l'alésage comprend un passage (43) menant du siège (42) à la seconde extrémité du tiroir (17) du distributeur.

7. Système anti-patinage selon la revendication 5 ou la revendication 6, caractérisé en ce que la première électro-vanne (35) isole la chambre (19) du ressort d'une chambre (38) de détendeur.

8. Système anti-patinage selon l'une quelconque des revendications précédentes, caractérisé en ce que le tiroir (17) du distributeur comporte un passage central (20).

9. Système anti-patinage selon la revendication 8, caractérisé en ce que le tiroir (17) du distributeur comporte trois gorges annulaires extérieures (22, 23, 24) dont les deux gorges (23, 24) qui sont les plus éloignées de la chambre (19) du ressort comportent des passages radiaux (25, 26) communiquant avec le passage central (20).

10. Système anti-patinage selon la revendication 9, caractérisé en ce que le tiroir (17) du distributeur travaille dans un manchon (11), le manchon (11) comportant trois gorges (27, 28, 29) et quatre passages transversaux (30, 31, 32, 33) destinés à se raccorder aux gorges annulaires (22, 23, 24) du tiroir (17) du distributeur.

11. Système anti-patinage selon la revendication 10, caractérisé en ce qu'une pompe (39) est destinée à prélever du fluide sur la chambre (38) du détendeur et à le renvoyer dans le passage transversal (33) le plus éloigné de la chambre (19) du ressort.

12. Système anti-patinage selon la revendication 10 ou 11, caractérisé en ce que le dosage du fluide d'exercice de freinage envoyé dans le frein est obtenu par la coopération de la gorge (24) du tiroir du distributeur qui est la plus éloignée de la chambre (19) du ressort avec le passage transversal (33) qui est le plus éloigné de la chambre (19) du ressort et dont le bord est situé sur le côté d'entrée.

13. Système anti-patinage selon l'une quelconque des revendications 1 à 7, caractérisé en ce que le tiroir (17) du distributeur comporte une gorge annulaire centrale (28) destinée à transmettre normalement du fluide d'une entrée (16) provenant d'un maître-cylindre (1) à une sortie (15) allant au frein (2).

14. Système anti-patinage selon la revendication 13, caractérisé en ce que le dosage du fluide d'exercice de freinage envoyé au le frein (2) s'obtient par la gorge (28) raccordant la sortie (15) à une chambre menant à la première électro-vanne (35).

15. Système anti-patinage selon l'une quelconque des revendications 1 à 7, caractérisé en ce que le tiroir (17) du distributeur comporte aux deux extrémités un forage central destiné à se raccorder aux trois passages radiaux, le premier forage central (20) se raccordant aux premier et second passages radiaux (25, 26) sur le côté d'une entrée (16) provenant d'un maître-cylindre (1), le second forage central (19) se raccordant au troisième passage radial (45) sur le côté du tiroir (17) du distributeur qui est voisin d'une chambre menant à la première électro-vanne (35).

16. Système anti-patinage selon la revendication 15, caractérisé en ce que le tiroir (17) du distributeur travaille dans un manchon (11), le manchon (11) comportant des gorges et des passages transversaux (31, 32, 33) destinés à se raccorder aux premier et second passages radiaux (25, 26) sur le côté d'entrée du tiroir (17) du distributeur.

17. Système anti-patinage selon la revendication 15 ou la revendication 16, caractérisé en ce qu'une pompe (39) est destinée à prélever du fluide sur la chambre (38) du détendeur et à le renvoyer dans le passage transversal (33) qui est le plus éloigné de la chambre (19) du ressort.

18. Système anti-patinage selon l'une quelconque des revendications 15 à 17, caractérisé en ce que le dosage du fluide d'exercice de freinage envoyé au frein s'obtient par l'intermédiaire du passage transversal (31) qui est le plus proche de la chambre (19) du ressort et du troisième passage radial (45) aboutissant à la chambre menant à la première électro-vanne (35).
